Europäisches Patentamt

(19) European Patent Office

Office européen des brevets

(11) **EP 0 766 098 A1**

(12) **EUROPEAN PATENT APPLICATION**

(43) Date of publication:
02.04.1997 Bulletin 1997/14

(51) Int. Cl.$^6$: **G01S 5/30**, G01S 5/18

(21) Application number: 96115560.3

(22) Date of filing: 27.09.1996

(84) Designated Contracting States:
AT BE DE DK ES FI FR GB GR IE IT LU NL PT SE

(30) Priority: 29.09.1995 JP 275018/95

(71) Applicant: Square Co., Ltd.
Meguro-ku, Tokyo 153 (JP)

(72) Inventor: Ohkawa, Hiroyasu,
c/o Square Co. Ltd.
Meguro-ku, Tokyo 153 (JP)

(74) Representative: Betten & Resch
Reichenbachstrasse 19
80469 München (DE)

(54) **System and method for generating three-dimensional position data**

(57)     A system for generating three-dimensional position data is so adapted as to make it comparatively easy to obtain accurate three-dimensional data representing the three-dimensional coordinates of one or a plurality of measurement points. Ultrasonic transmitters are deployed at a plurality of measurement points on an object of interest and ultrasonic receivers are deployed at the apices of a frame surrounding the object. Ultrasonic waves are emitted from one of the ultrasonic transmitters and a counter starts counting from the moment ultrasonic waves are transmitted. When the ultrasonic receivers receive the emitted ultrasonic waves, the count data in the counter are latched in corresponding latch circuits. The data that have been latched in these latch circuits are accepted by a controller/processor, which computes three-dimensional coordinate data of the measurement point based upon these items of latched data.

Fig. 5

EP 0 766 098 A1

## Description

### BACKGROUND OF THE INVENTION

Field of the Invention:

This invention relates to a system for generating three-dimensional position data, and as well as to a method thereof. More particularly, the invention relates to a system and method for obtaining data representing the three dimensional position of one or a plurality of measurement points.

Description of the Related Art:

In the field of computer graphics, video is generated by three-dimensional graphics in order to express the video in the form of a solid. If position coordinate data representing a plurality of points constituting the skeleton of an object to be displayed are available, then it is possible to create three-dimensional display data which will express the surface of the object smoothly.

In a situation where the object moves, acquiring the position coordinate data of the points on the skeleton is very difficult. Position coordinate data of a plurality of skeleton points of the object must be obtained while the object is moved in small increments. If the position coordinate data obtained are not accurate, the movement of the object in the computer graphics created based upon these data will be unnatural.

### SUMMARY OF THE INVENTION

An object of the present invention is to obtain, in a comparatively easy way, accurate data representing the three-dimensional positions of one or a plurality of measurement points.

According to the present invention, the foregoing object is attained by providing a system for generating three-dimensional position data, comprising ultrasonic transmitting means, deployed at a measurement point at which position data are to be obtained, for transmitting ultrasonic waves into surrounding space, a plurality of ultrasonic receiving means, deployed in three-dimensional space at respective ones of at least three different predetermined positions about the measurement point, for receiving the ultrasonic waves transmitted from the ultrasonic transmitting means and outputting a reception signal, time-keeping means for measuring propagation time from transmission of the ultrasonic waves by the ultrasonic transmitting means to reception of the ultrasonic waves by each of the ultrasonic receiving means, and position calculating means for calculating distance from the ultrasonic transmitting means to each of the ultrasonic receiving means based upon each propagation time measured by the time-keeping means, and calculating data, which represent the three-dimensional position of the measurement point at which the ultrasonic transmitting means is provided, based upon the calculated distances.

According to the present invention, the foregoing object is attained by providing a method of generating three-dimensional position data, comprising the steps of deploying ultrasonic transmitting means at a measurement point at which position data are to be obtained for transmitting ultrasonic waves to surrounding space, deploying a plurality of ultrasonic receiving means, each of which is for receiving the ultrasonic waves transmitted from the ultrasonic transmitting means and outputting a reception signal, at least at three different predetermined positions about the measurement point in three-dimensional space, measuring propagation time from transmission of the ultrasonic waves by the ultrasonic transmitting means to reception of the ultrasonic waves by each of the ultrasonic receiving means, calculating distance from the ultrasonic transmitting means to each of the ultrasonic receiving means, and calculating data, which represent the three-dimensional position of the measurement point at which the ultrasonic transmitting means is provided, based upon the calculated distances.

In a case where position data at a plurality of measurement points are obtained, the ultrasonic transmitting means are provided at each of the plurality of measurement points. The plurality of ultrasonic transmitting means are driven so as to transmit ultrasonic waves one at a time in succession at a predetermined transmission period. Ultrasonic transmission time from the ultrasonic transmitting means to each ultrasonic receiving means is measured in each transmission period. Three-dimensional position data representing the positions of each of the three measurement points are calculated using the propagation time data that have been obtained.

The time (propagation time) needed for the ultrasonic waves emitted from one measurement point to reach at least three ultrasonic receiving means depends upon the distance between the measurement point and the ultrasonic receiving means. The above-mentioned distance can be calculated on the basis of the propagation time. If the position at which the ultrasonic receiving means is deployed is already known, the position of the measurement point can be determined geometrically.

Data representing the position of the measurement point can be obtained by a comparatively simple arrangement, namely the arrangement in which the ultrasonic transmitting means is deployed at the measurement point and the at least three ultrasonic receiving means are deployed about the measurement point, and by comparatively simple geometric computation.

In a case where position data of a plurality of measurement points are obtained, it will suffice to deploy ultrasonic transmitting means at each measurement point and transmit ultrasonic waves from each measurement point at time intervals. As a result, the position data can be acquired comparatively simply even with regard to a plurality of measurement points.

In a case where position data representing the skeleton of a moving object are obtained, ultrasonic transmitting means need only be provided at predetermined locations of the object. Skeleton position data representing the motion of the object can be obtained by repeating ultrasonic transmission and reception while moving the object in small increments.

Other features and advantages of the present invention will be apparent from the following description taken in conjunction with the accompanying drawings, in which like reference characters designate the same or similar parts throughout the figures thereof.

## BRIEF DESCRIPTION OF THE DRAWINGS

Fig. 1 illustrates an example of the deployment of ultrasonic transmitters and ultrasonic receivers;

Fig. 2 is a diagram showing the positional relationship between measurement points and reception points;

Fig. 3 is a diagram for describing an approach to calculation of three-dimensional coordinates of a measurement point based upon the distances from one measurement point to four reception points;

Fig. 4 is a diagram for describing an approach to calculation of three-dimensional coordinates of a measurement point based upon the distances from one measurement point to three reception points;

Fig. 5 is a block diagram illustrating the electrical configuration of a system for generating three-dimensional coordinate data;

Fig. 6 is a timing chart illustrating the operation of the system for generating three-dimensional coordinate data shown in Fig. 5;

Fig. 7 is a block diagram illustrating the electrical configuration of a modification of a system for generating three-dimensional coordinate data; and

Fig. 8 is a timing chart illustrating the operation of the modification shown in Fig. 7.

## DESCRIPTION OF THE PREFERRED EMBODIMENT

A system for generating three-dimensional position data generates three-dimensional position data serving as a foundation for creation of three-dimensional graphics data representing a moving object, e.g., a person, an animal or a doll (representative of a monster, robot, etc.). In order to create three-dimensional graphics data of an object, three-dimensional position data representing a plurality of positions (referred to as "measurement points" below) that construct the skeleton of the object are required. The positions of the measurement points and the number thereof differ depending upon the type of object, the precision of the three-dimensional graphics, etc.. For example, in case of a doll, it is required that measurement points be provided at prescribed locations such as the head, shoulders, elbows, wrists, waist, knees and ankles.

To obtain three-dimensional position data of each measurement point, ultrasonic waves (having a frequency of, e.g., 40 kHz) emitted into the surrounding space from an ultrasonic transmitter attached to the object at each measurement point thereof are received by a plurality of ultrasonic receivers secured at prescribed positions, the propagation times from transmission of the ultrasonic waves to reception by the plurality of ultrasonic receivers are measured and the three-dimensional position data are computed based upon the propagation times measured.

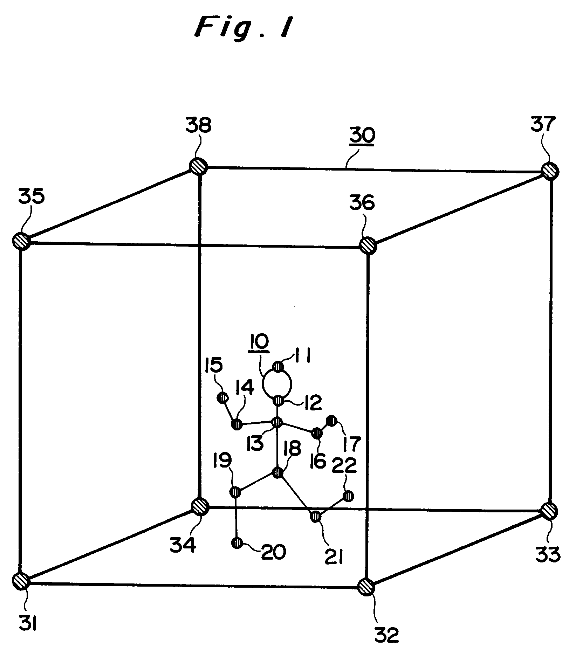

Fig. 1 illustrates an example of the deployment of ultrasonic transmitters and ultrasonic receivers in a system for generating three-dimensional position data.

An object 10 is, e.g., a doll (robot) manipulated by the operator. Measurement points are provided at prescribed locations on the object 10, namely at the head, neck, chest, right elbow, right wrist, left elbow, left wrist, waist, right knee, right ankle, left knee and left angle. Ultrasonic transmitters 11, 12, 13, 14, 15, 16, 17, 18, 19, 20, 21 and 22 are attached to respective ones of these measurement points. A greater number of measurement points are set as needed.

A frame 30 in the shape of a regular hexahedron (or rectangular parallelepiped) is provided surrounding the range of operation and range of movement of the object 10. The frame 30 may be constructed in part utilizing the floor, walls and ceiling of a room or may be assembled using columnar members (made of wood or metal). The bottom surface of the frame 30 is the floor where the object 10 moves on. The ultrasonic receivers 31, 32, 33 and 34 are provided at the lower apices of the frame 30 and the ultrasonic receivers 35, 36, 37 and 38 are provided at the upper apices.

The ultrasonic receivers 31 ~ 38 need not necessarily be deployed at each of the apices of the frame 30. It will suffice if one ultrasonic receiver is adopted as a reference and the positions of the other ultrasonic receivers relative to this reference receiver are known. For example, in a case where measurement is performed in a room where there is little reflection of ultrasonic waves, a plurality of some of the ultrasonic receivers may be deployed on the floor, or at positions (on a wall, for example) having such a height that they are near the floor, so as to surround the object, and the remaining plurality of ultrasonic receivers may be deployed on the ceiling, or at positions (on a wall, for example) having such a height that they are near the ceiling, so as to surround the object. Further, the number of ultrasonic receivers is not limited to eight; more or less than eight may be provided.

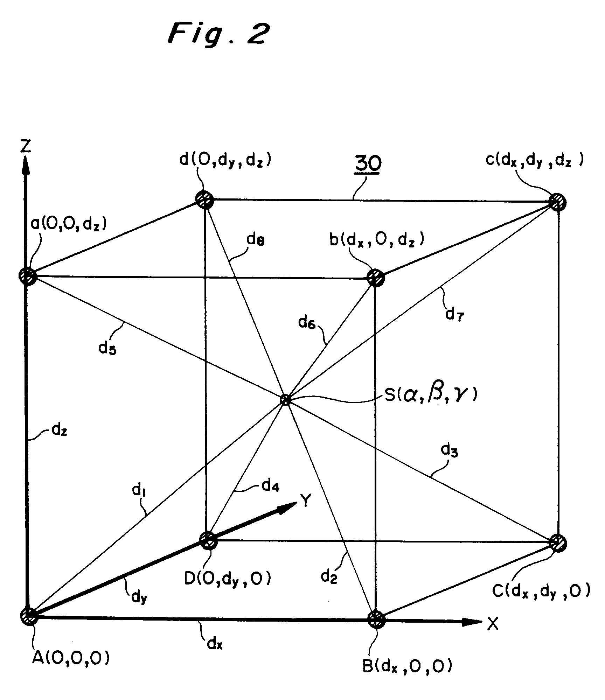

Fig. 2 illustrates the position of an ultrasonic transmitter and the positions of ultrasonic receivers in an X, Y, Z three-dimensional rectangular coordinate system. The position of one of the ultrasonic transmitters 11 ~ 22, namely one measurement point, is indicated by a point S $(\alpha, \beta, \gamma)$. The positions of eight ultrasonic receivers 31, 32, 33, 34, 35, 36, 37 and 38 are indicated by points A, B, C, D, a, b, c and d, respectively. These points A ~ d are referred to collectively as "reception points". Point A is adopted as the origin of the XYZ coordinate system. All of these reception points reside in the positive area of the XYZ coordinate system.

Let the lengths of the sides of a rectangular parallelepiped along the X, Y and Z axes (namely the distances between points A and B, between points A and D and between points A and a) be represented by $d_x$, $d_y$ and $d_z$, respectively (these distances have already been measured). The coordinates of the reception points are A (0,0,0), B ($d_x$,0,0), C ($d_x$,$d_y$,0), D (0,$d_y$,0), a (0,0,$d_x$), b ($d_x$,0,$d_z$), c ($d_x$,$d_y$,$d_z$) and d (0,$d_y$, $d_z$).

Let the distances from the measurement point S to the points A, B, C, D, a, b, c and d be represented by $d_1$, $d_2$, $d_3$, $d_4$, $d_5$, $d_6$, $d_7$ and $d_8$, respectively (these distances are measured in a manner set forth below).

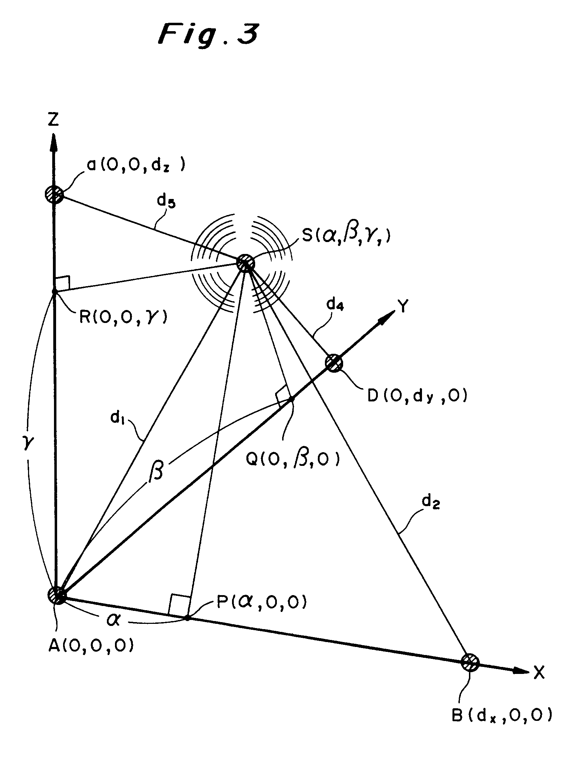

Fig. 3 is a diagram for describing a method of computing three-dimensional coordinate data representing the position of the above-mentioned ultrasonic transmitter based upon the distances from one ultrasonic transmitter (measurement point) to at least four ultrasonic receivers (reception points). The measurement point S and four reception points A, B, D and a shown in Fig. 2 are illustrated in Fig. 3.

Let P, Q and R represent the points of intersection between the axes X, Y and Z and perpendiculars from the measurement point S to the axes X, Y and Z, respectively. Specifically, these points are P ($\alpha$,0,0), Q (0,$\beta$,0), R (0,0,$\gamma$).

A length $\alpha$ in a triangle SAB defined by the three points S, A and B is represented by the following equation:

$$\alpha = d_1 \cos\angle SAB \qquad (1)$$

In the triangle SAB, the following equation holds from the theorem of cosines:

$$d_2{}^2 = d_1{}^2 + d_x{}^2 - 2d_1 d_x \cos\angle SAB \qquad (2)$$
$$\maltese \cos\angle SAB = (d_1{}^2 + d_x{}^2 - d_2{}^2)/(2d_1 d_x)$$

Substituting Equation (2) into Equation (1) gives us the following equation:

$$\alpha = d_1(d_1{}^2 + d_x{}^2 - d_2{}^2)/(2d_1 d_x) \qquad (3)$$
$$= (d_1{}^2 + d_x{}^2 - d_2{}^2)/(2d_x)$$

Similarly, lengths $\beta$ and $\gamma$ are represented by the following equations:

$$\beta = (d_1{}^2 + d_y{}^2 - d_4{}^2)/(2d_y) \qquad (4)$$

$$\gamma = (d_1{}^2 + d_z{}^2 - d_5{}^2)/(2d_y) \qquad (5)$$

Thus, three-dimensional coordinates representing the measurement point S can be obtained based upon the distances from the measurement point S to at least four reception points.

The method set forth above may be summarized as follows: From eight reception points, one reception point serving as a reference is selected (this reception point shall be referred to as a reference reception point). Three reception points neighboring this reference reception point along the X, Y, Z directions (inclusive of negative directions), respectively, are selected. The distances from one measurement point to these four reception points are measured. The three-dimensional coordinates of this one measurement point are calculated using the four distances measured.

For example, when the point c is adopted as the reference reception point in Fig. 2, the reception points neighboring this reference reception point along the -X, -Y, -Z directions are the points d, b, C, respectively. The coordinates of the measurement point S can be calculated using the distances $d_7$, $d_8$, $d_6$ and $d_3$ from the measurement point S to the four points c, d, b and C, respectively.

Of course, the reception points are not limited to four in number. In such case the reception points need not neighbor the reference reception point. In particular, if a pair of reception points situated on substantially opposite sides of the measurement point are selected, dead angles are eliminated. In other words, the ultrasonic waves can always be received by at least one of the two reception points.

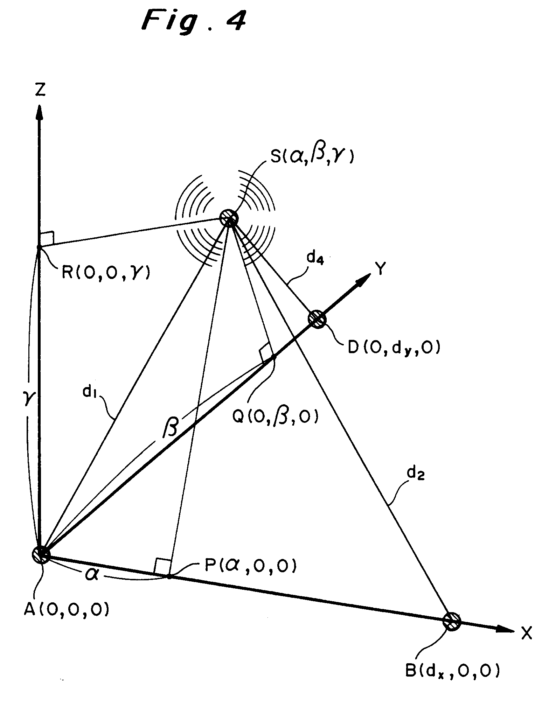

Fig. 4 is a diagram for describing a method of computing three-dimensional coordinate data representing the position of ultrasonic transmitter based upon the distances from one ultrasonic transmitter (measurement point) to at least three ultrasonic receivers (reception points). The point a shown in Fig. 3 is not illustrated in Fig. 4.

The distance $d_1$ from measurement point S to point A is represented by the following equation:

$$d_1 = (\alpha^2 + \beta^2 + \gamma^2)^{1/2} \qquad (6)$$

Similarly, the distance $d_2$ from measurement point S to point B ($d_x$,0,0) and the distance $d_4$ from measurement point S to point D (0,dy,0) are represented by the following equations:

$$d_2 = \{(d_x-\alpha)^2 + \beta^2 + \gamma^2\}^{1/2} \qquad (7)$$

$$d_4 = \{\alpha^2 + (d_y-\beta)^2 + \gamma^2\}^{1/2} \qquad (8)$$

Arranging Equations (6) ~ (8) gives us the following equations:

$$\alpha^2 + \beta^2 + \gamma^2 = d_1{}^2 \qquad (9)$$

$$\alpha^2 - 2\alpha d_x + d_x{}^2 + \beta^2 + \gamma^2 = d_2{}^2 \qquad (10)$$

$$\alpha^2 + \beta^2 - 2\beta d_y + d_y{}^2 + \gamma^2 = d_4{}^2 \qquad (11)$$

Equation (10) is subtracted from Equation (9) to find $\alpha$.

$$\alpha = (d_x{}^2 + d_1{}^2 - d_2{}^2)/(2d_x) \qquad (12)$$

Similarly, Equation (11) is subtracted from Equation (9) to find β.

$$\beta = (d_y{}^2 + d_1{}^2 - d_4{}^2)/(2d_y) \qquad (13)$$

We obtain γ by transforming Equation (6).

$$\gamma = (d_1{}^2 - \alpha^2 - \beta^2)^{1/2} \qquad (14)$$

If α, β have been calculated, γ is computed using these calculated values.

Three-dimensional coordinates of the measurement point S are thus obtained. This method is such that if at least three arbitrary points are selected from among eight reception points, three-dimensional coordinates of the measurement point can be calculated using the distances from the measurement point to each of the selected points.

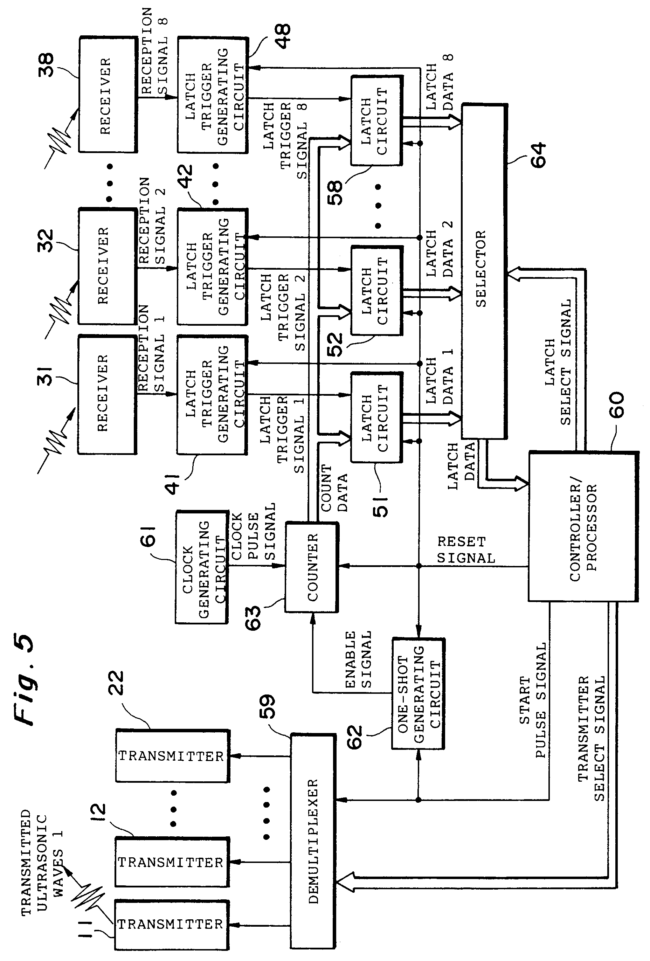

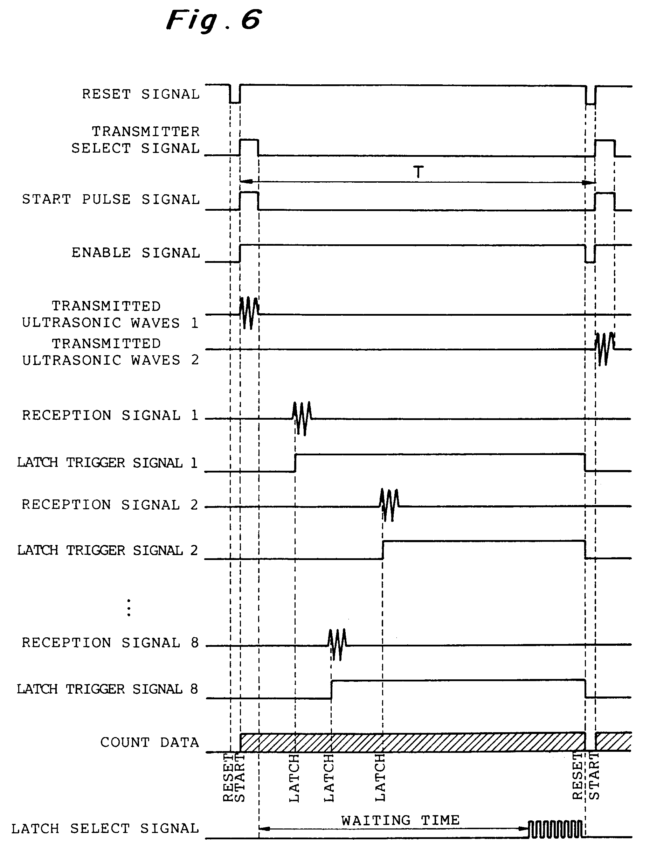

Fig. 5 is a block diagram illustrating the electrical configuration of a system for generating three-dimensional position data, and Fig. 6 is a timing chart showing the operation of each of the circuits depicted in Fig. 5.

The overall operation of the system for generating three-dimensional position data is supervised by a controller/processor 60. The latter preferably is implemented by a computer system.

First, the controller/processor 60 applies a reset signal to a one-shot generating circuit 62, a counter 63, latch trigger generating circuits 41, 42, • • •, 48 and latch circuits 51, 52, • • •, 58. These circuits are reset in response to the negative-going edge of the reset signal.

Next, the controller/processor 60 outputs a start pulse signal for causing any one of the ultrasonic transmitters 11, 12, • • •, 22 to emit ultrasonic waves and a transmitter select signal for selecting the one ultrasonic transmitter.

A demultiplexer 59 applies a start pulse signal to the ultrasonic transmitter specified by the transmitter select signal provided by the controller/processor 60. The ultrasonic transmitter to which the start pulse signal has been applied responds by emitting pulsed ultrasonic waves into the surrounding space.

The start pulse signal and the transmitter select signal are outputted at a fixed transmission period T. The plurality of ultrasonic transmitters 11 ~ 22 are successively designated one at a time by the transmitter select signal. The transmission period T is set upon taking into account the time needed for the ultrasonic waves transmitted by one ultrasonic transmitter to be received by all of the ultrasonic receivers 31 ~ 38 and for the data representing the measured ultrasonic propagation time to be accepted by the controller/processor 60. The transmission period T is set to be longer than this time. The reset signal is outputted repeatedly at the period T in the same fashion immediately before the start pulse signal.

The start pulse signal outputted by the controller/processor 60 is applied to the one-shot generating circuit 62 as well. The one-shot generating circuit 62 outputs an enable signal in response to the positive-going edge of the start pulse signal. The enable signal is applied to the counter 63, thereby placing the counter 63 in the count-enable state. The one-shot time of the one-shot generating circuit 62 is set to be longer than the transmission period T. The enable signal is forcibly reset by the reset signal.

A clock generating circuit 61 generates a clock pulse signal having a constant frequency. The frequency of the clock pulse signal determines the resolution of three-dimensional coordinate measurement. For example, if the frequency of the clock pulse signal is 1 MHz, a resolution on the order of 0.3 mm is obtained.

After being reset by the reset signal, the counter 63 counts the clock pulses from the clock generating circuit 61 during the time that the enable signal is being provided by the one-shot generating circuit 62.

Upon receiving ultrasonic waves from an ultrasonic transmitter, the ultrasonic receiver 31 outputs a reception signal 1. The reception signal 1 is applied to the latch trigger generating circuit 41. When the reception signal 1 having a level greater than a predetermined threshold level enters, the latch trigger generating circuit 41 generates a latch trigger signal 1. The count data being outputted by the counter 63 is latched in the latch circuit 51 at the moment the latch trigger signal 1 is produced. The latched count data correspond to the propagation time from transmission of the ultrasonic wave from the designated ultrasonic transmitter to reception of the ultrasonic wave by the ultrasonic receiver 31.

Similarly, the ultrasonic receivers 32 ~ 38 respectively output reception signals 2 ~ 8 that represent the ultrasonic waves received. The latch trigger generating circuits 42 ~ 48 output latch trigger signals 2 ~ 8 based upon the reception signals 2 ~ 8 provided by the ultrasonic receivers 32 ~ 38, respectively. The latch circuits 52 ~ 58 latch the count data from the counter 63 in response to the corresponding latch trigger signals.

Upon elapse of a fixed waiting time following the output of the start pulse signal, the controller/processor 60 provides a selector 64 with a latch select signal for successively accepting the latch data latched in the latch circuits 51 ~ 58. The waiting time is set in advance as time greater than the maximum value of time required for ultrasonic waves to reach an ultrasonic receiver from an ultrasonic transmitter.

In response to the latch select signal provided by the controller/processor 60, the selector 64 successively selects the latch data 1 ~ 8 that have been latched in the latch circuits 51 ~ 58, respectively. (The latch data 1 ~ 8 represent the count data 1 ~ 8, respectively, that prevailed when the data were latched.) The controller/processor 60 successively accepts the latch data 1 ~ 8 and stores the data temporarily in a memory peripheral to the controller/processor 60.

An arrangement may be adopted in which the transfer of the latch data to the controller/processor 60 is started, even before the waiting time elapses, upon sensing the data that have been latched in all of the latch circuits based upon the latch trigger signals 1 ~ 8. Alternatively, an arrangement may be adopted in which whenever a latch circuit latches count data, the latch data are sent to the controller/processor 60 at such time.

The controller/processor 60 outputs the reset signal after the latch data 1 ~ 8 latched by the latch circuits 51 ~ 58 have been accepted by the controller/processor 60.

Thus, with regard to one ultrasonic transmitter, one set of latch data 1 ~ 8 for obtaining data that represent the distances from this ultrasonic transmitter to each of the ultrasonic receivers 31 ~ 38 is obtained.

The operation described above is performed repeatedly while the ultrasonic transmitter that is to transmit the ultrasonic waves is changed at the transmission period T. One set of latch data 1 ~ 8 is obtained with regard to each of the total number of ultrasonic transmitters 11 ~ 22.

In this embodiment, the object 10 is a doll (robot) manipulated by the operator. A set of latch data (propagation times from one ultrasonic transmitter to eight ultrasonic receivers) is obtained with regard to each of 12 measurement points set at respective locations on the doll.

In a case where three-dimensional coordinate data of each location on a doll are acquired as foundation data for creating graphics data representing a moving doll, it is required that latch data be obtained with regard to the 12 measurement points in each attitude of the doll while the doll is moved (manipulated) in small increments. Accordingly, the above-described operation of performing a series of ultrasonic transmissions and performing measurement based upon the reception of the ultrasonic waves (the sequential ultrasonic transmission from each of the 12 ultrasonic transmitters) is carried out repeatedly with regard to each attitude and position of the doll while the attitude and position are changed.

The latch trigger signals outputted by the latch trigger generating circuits 41 ~ 48 may be pulse signals. In such case the latch trigger generating circuits 41 ~ 48 need not be reset by a reset signal.

After accepting one set of data, acquiring a series of data for one attitude of the doll, or acquiring a series of data for all attitudes of the doll while the doll is moved, the controller/processor 60 executes processing to calculate the positions of the ultrasonic transmitters (measurement points) based upon the latch data stored in memory.

Propagation times $t_1 \sim t_8$ ($t_i$; i = 1 ~ 8) required for ultrasonic waves to propagate from one ultrasonic transmitter to each of the ultrasonic receivers 31 ~ 38 are calculated using one set of latch data (count data) 1 ~ 8 stored in the memory as well as the frequency of the clock pulse signal.

Distances $d_1 \sim d_8$ ($d_i$; i = 1 ~ 8) from the ultrasonic transmitter to each of the ultrasonic receivers 31 ~ 38 are calculated in accordance with the following equation using the propagation times $t_1 \sim t_8$ ($t_i$; i = 1 ~ 8).

$$d_i = (331.5 + 0.607 \times Temp)t_i \qquad (15)$$

where Temp is the temperature around the object 10 (the temperature inside the frame 10).

In a case where three-dimensional coordinate data of each measurement point S are calculated based upon Equations (3) through (5), one reception point is selected as the reference reception point from among eight reception points, and three other points neighboring this reference reception point are selected. The coordinates of the measurement point S are calculated based upon the distances measured from the measurement point S to these four selected points.

The coordinates of one measurement point S should be calculated a plurality of times (a number of times less than the number of reception points) while the reference reception point is changed. The mean value of the plural items of coordinate data obtained with regard to one measurement point is calculated and this mean value is adopted as the final three-dimensional coordinate data of the measurement point. By thus calculating the mean value of the three-dimensional coordinate data, highly precise position coordinate data indicative of the measurement point are obtained.

In a case where Equations (12) through (14) are used, at least three points are selected from among the eight reception points. The coordinates of the measurement point S are calculated based upon the measured distances from the measurement point S to these three selected points. If the coordinates of one measurement point are calculated a plurality of times while the combination of three selected points is changed and if the mean of these coordinates is found, then coordinate data having higher precision are obtained.

Before the mean value of the plural items of coordinate data obtained with regard to one measurement point is calculated, these coordinate data may be clustered. A cluster which contains the largest number of data is found and the mean value of the coordinate data contained in this cluster is calculated. As a result, coordinate values that deviate from the mean value too widely can be excluded. This makes it possible to calculate coordinate data of the measurement point more accurately.

There are instances where ultrasonic waves emitted by an ultrasonic transmitter fail to be received by a receiver or where a latch trigger signal fails to be outputted because the amplitude of ultrasonic waves that have been received by an ultrasonic receiver does not exceed a predetermined threshold value level. In such cases the count data will not be latched in the latch circuit that corresponds to the particular ultrasonic receiver. In other words, the latch data remain as data that have been reset. When latch data thus remain as reset data, the controller/processor 60 sets data, which represent that a propagation time could not be obtained,

as time $t_i$. For example, infinity ($\infty$) is set as the time $t_i$.

In a case where infinity has been set as time $t_i$, the distance $d_i$ corresponding to this time $t_i$ also is set to infinity. In the above-described processing for calculating the coordinate data of a measurement point, the distance $d_i$ that has been set to infinity is excluded.

When data indicative of the distance $d_i$ capable of being used in the calculation of the coordinates of a measurement point are few in number, it is preferred that the calculations based upon Equations (12) ~ (14) be performed.

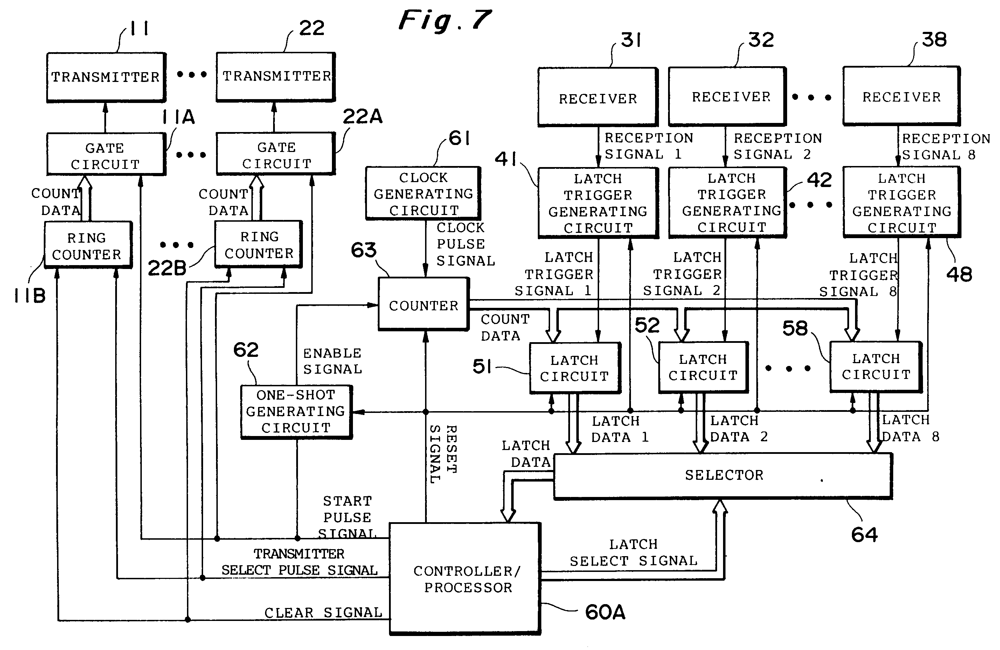

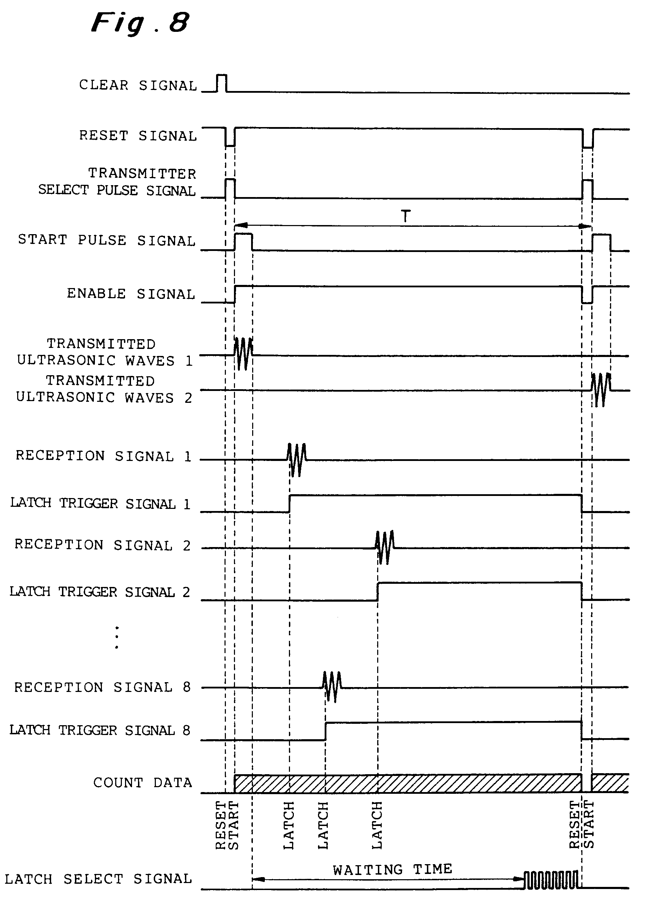

Fig. 7 illustrates a modification of the system for generating three-dimensional position data, and Fig. 8 illustrates a timing chart associated with this modification. Elements in Fig. 7 identical with those shown in Fig. 5 are designated by like reference characters and need not be described again.

Gates 11A ~ 22A and ring counters 11B ~ 22B are connected to the ultrasonic transmitters 11 ~ 22, respectively. Only the ultrasonic transmitters may be attached to the object 10 or the gate circuits and ring counters may be attached to the object 10 in addition to the ultrasonic transmitters.

The ring counters 11B ~ 22B are duodecimal (modulo-12) counters and have their count data cleared by a clear signal from a controller/processor 60A. The clear signal is outputted just one time before the 12 ultrasonic transmitters are successively driven one at a time. The ring counters 11B ~ 22B are counted up one at a time in response to a transmitter select pulse signal from the controller/processor 60A. The transmitter select pulse signal is outputted at the transmission period T in sync with the reset signal.

The gate circuits 11A ~ 22A contain decoders for detecting specific data from among the count data of the corresponding ring counters 11B ~ 22B. In response to detection of the specific data by the decoder, the gate circuit selectively passes the start pulse signal from the controller/processor 60A. The gate circuit 11A applies the start pulse signal to the ultrasonic transmitter 11 when the count data in ring counter 11B is 1. Similarly, the gate circuit 22A applies the start pulse signal to the ultrasonic transmitter 22 when the count data in ring counter 22B is 0. The other gate circuits also allow passage of the start pulse only when the count data are specific data that have been set in the respective gate circuits.

Thus, ultrasonic pulses are transmitted in regular order from only one of the ultrasonic transmitters 11 ~ 22 at the transmission period T. The operation for measuring the distances between the measurement point and reception points and the processing for calculating the coordinates of the measurement point are the same as in the embodiment described above.

As many apparently widely different embodiments of the present invention can be made without departing from the spirit and scope thereof, it is to be understood that the invention is not limited to the specific embodiments thereof.

## Claims

1. A system for generating three-dimensional position data, comprising:

ultrasonic transmitting means, deployed at a measurement point at which position data are to be obtained, for transmitting ultrasonic waves into surrounding space;
a plurality of ultrasonic receiving means, deployed in three-dimensional space at respective ones of at least three different predetermined positions about the measurement point, for receiving the ultrasonic waves transmitted from said ultrasonic transmitting means and outputting reception signals;
time-keeping means for measuring propagation time from transmission of the ultrasonic wave by said ultrasonic transmitting means to reception of the ultrasonic waves by each of said ultrasonic receiving means; and
position calculating means for calculating distance from said ultrasonic transmitting means to each of said ultrasonic receiving means based upon each propagation time measured by said time-keeping means, and calculating data, which represent the three-dimensional position of the measurement point at which said ultrasonic transmitting means is provided, based upon the calculated distances.

2. The system according to claim 1, wherein said ultrasonic transmitting means is provided at each of a plurality of measurement points, these plurality of ultrasonic transmitting means are driven so as to successively transmit, one at a time, ultrasonic waves at a predetermined transmission period, ultrasonic propagation times for ultrasonic propagation from said ultrasonic transmitting means to each of said ultrasonic receiving means are measured by said time-keeping means in each transmission period, and three-dimensional position data representing the position of each of the plurality of measurement points are calculated by said position calculating means.

3. The system according to claim 1, wherein said plurality of ultrasonic receiving means are deployed at respective ones of apices of a regular hexahedron or rectangular parallelepiped surrounding said measurement point.

4. A method of generating three-dimensional position data, comprising the steps of:

deploying ultrasonic transmitting means at a measurement point at which position data are to be obtained for transmitting ultrasonic waves into surrounding space, and deploying a plurality of ultrasonic receiving means, each of which is for receiving the ultrasonic waves transmitted from the ultrasonic transmitting means and outputting a reception signal, in three-dimensional space at respective ones of at least three different predetermined positions about the measurement point;

measuring propagation time from transmission of the ultrasonic waves by the ultrasonic transmitting means to reception of the ultrasonic waves by each of the ultrasonic receiving means; and

calculating distance from the ultrasonic transmitting means to each of the ultrasonic receiving means, and calculating data, which represent the three-dimensional position of the measurement point at which the ultrasonic transmitting means is provided, based upon the calculated distances.

5. The method according to claim 4, wherein said ultrasonic transmitting means is provided at each of a plurality of measurement points, these plurality of ultrasonic transmitting means are driven so as to successively transmit, one at a time, ultrasonic waves at a predetermined transmission period, ultrasonic propagation times for ultrasonic propagation from said ultrasonic transmitting means to each of said ultrasonic receiving means are measured in each transmission period, and three-dimensional position data representing the position of each of the plurality of measurement points are calculated.

# Fig. 1

## Fig. 2

# *Fig.3*

# Fig. 4

Fig. 5

Figure 5: Block diagram showing TRANSMITTED ULTRASONIC WAVES 1, TRANSMITTERS (11, 12, 22), DEMULTIPLEXER (59), RECEIVERS (31, 32, 38), LATCH TRIGGER GENERATING CIRCUITS (41, 42, 48), LATCH CIRCUITS (51, 52, 58), SELECTOR (64), CONTROLLER/PROCESSOR (60), COUNTER (63), CLOCK GENERATING CIRCUIT (61), ONE-SHOT GENERATING CIRCUIT (62). Signals: RECEPTION SIGNAL 1/2/8, LATCH TRIGGER SIGNAL 1/2/8, LATCH DATA 1/2/8, LATCH DATA, LATCH SELECT SIGNAL, RESET SIGNAL, COUNT DATA, CLOCK PULSE SIGNAL, ENABLE SIGNAL, START PULSE SIGNAL, TRANSMITTER SELECT SIGNAL.

# Fig. 6

Fig.7

# *Fig.8*

European Patent
Office

**EUROPEAN SEARCH REPORT**

Application Number

EP 96 11 5560

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 152 905 (TRAVENOL GMBH) 28 August 1985<br>* page 4 - page 5 *<br>* page 14, line 23 - page 16, line 29 *<br>* page 21, line 11 - page 22, line 18; figures *<br>* claim 8 *<br>--- | 1-5 | G01S5/30<br>G01S5/18 |
| X | DE-A-41 19 150 (BRUNNER WOLFGANG ;ZECH LUDWIG VON (DE)) 17 December 1992<br>* column 1 - column 4 *<br>--- | 1-5 | |
| A | US-A-3 924 450 (UCHIYAMA TOMOYOSHI ET AL) 9 December 1975<br>* the whole document *<br>--- | 1-5 | |
| A | DE-A-27 04 511 (SIEMENS AG) 10 August 1978<br>* claims; figures *<br>----- | 1-5 | |
| | | | **TECHNICAL FIELDS SEARCHED (Int.Cl.6)**<br><br>G01S |

The present search report has been drawn up for all claims

| Place of search | Date of completion of the search | Examiner |
|---|---|---|
| THE HAGUE | 12 December 1996 | Devine, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)